# EUROPEAN PATENT SPECIFICATION

(11) **EP 3 806 056 B1**
(45) Date of publication and mention of the grant of the patent: **25.03.2026**
(21) Application number: 19811635.2
(22) Date of filing: 19.04.2019
(51) Int. Cl.: G08B 17/06

(54) **HEAT SENSOR**
WÄRMESENSOR
CAPTEUR DE CHALEUR

(30) Priority: 31.05.2018 JP 2018105244
(43) Date of publication of application: 14.04.2021
(73) Proprietor: Panasonic Intellectual Property Management Co., Ltd., Osaka-shi, Osaka 540-6207 (JP)
(72) Inventor: HASHIMOTO, Yusuke, Osaka-shi, Osaka 540-6207 (JP); MURO, Naoki, Osaka-shi, Osaka 540-6207 (JP); MORI, Yasuhiro, Osaka-shi, Osaka 540-6207 (JP)
(74) Representative: Müller-Boré & Partner Patentanwälte PartG mbB
(86) International application number: PCT/JP2019/016778
(87) International publication number: WO 2019/230244

(56) References cited:
- CN-Y- 2 613 839
- JP-A- 2001 006 067
- JP-A- 2009 230 510
- JP-A- 2009 230 510
- JP-A- 2014 126 878
- JP-A- H07 239 988
- JP-U- H0 255 397
- JP-U- H0 255 397
- JP-U- S4 724 087
- JP-U- S52 170 584
- US-A1- 2008 018 485
- US-A1- 2008 018 485
- US-A1- 2016 025 628
- US-A1- 2016 025 628

## Description

### TECHNICAL FIELD

The present disclosure relates to a heat sensor which senses heat generated by fire or the like.

### BACKGROUND ART

Heat sensors which sense heat generated by fire or the like have been conventionally known. Patent Literature 1 (PTL1) discloses, as one example of a heat sensor of this type, a heat sensor which includes: a housing; a thermistor which is arranged outside of the housing; and a protection frame which is provided so as to cover the outside of the thermistor. In the aforementioned heat sensor, heat of gas flowing towards the heat sensor upon the fire is detected by the use of the thermistor arranged outside of the housing.

JP 2009 230510 A describes a thermistor connected to a circuit board, the thermistor being is installed in a casing. A first opening whose height becomes the same as the height of the installation position of the thermistor is installed so that hot air flowing from the outer periphery of the casing can flow to the top end of the thermistor. Also, a sounding body as an obstacle is installed in a different space separated by the circuit board.

US 2016/025628 A1 describes a mobile device which senses particulate matter. The mobile device includes a housing having an air flow path through which air flows when the mobile device is shaken; an inertia sensor that detects acceleration of the mobile device; a light-scattering type sensor that irradiates the air flow path with light and detects particulate matter in air flowing through the air flow path; and a controller that includes a counter for counting the particulate matter detected by the light-scattering type sensor, and a flow rate calculator for detecting an air flow rate of the air flow path based on a detection signal of the inertia sensor.

US2008/018485 A1 describes improved optical particle detection devices and methods of manufacturing.

JP 2014 126878 A describes a temperature observation chip is arranged in each of a plurality of monitoring blocks into which a monitoring area A is virtually divided, to observe a temperature in the monitoring block, and the temperature is transmitted to a monitoring device. The monitoring device determines a fire in the monitoring area A on the basis of observed temperatures in respective monitoring blocks observed by the plurality of temperature observation chips and transmits a fire detection signal to a receiver to cause output of a fire alarm.

### Citation List

### Patent Literature

PTL 1: Japanese Unexamined Patent Application Publication No. H10-334360

### SUMMARY OF THE INVENTION

### TECHNICAL PROBLEM

There have been demands in recent years for making a heat sensor thinner for the purpose of improving the appearance of the inside of a building where the heat sensor is installed. However, the heat sensor disclosed in PTL 1 faces a problem that the thickness of the heat sensor becomes large.

Thus, it is an object of the present disclosure to make a heat sensor thinner.

### SOLUTION TO PROBLEM

The underlying technical problem is solved by a heat sensor according to the independent claim. Additional embodiments are defined in the dependent claims.

### ADVANTAGEOUS EFFECT OF INVENTION

The present disclosure makes it possible to make a heat sensor thinner.

### BRIEF DESCRIPTION OF DRAWINGS

FIG. 1 is a view illustrating a heat sensor of a comparative example.
FIG. 2 is a perspective view of a heat sensor according to an embodiment.
FIG. 3 is a perspective view illustrating component mounted substrate arranged inside of the heat sensor according to the embodiment.
FIG. 4 is a diagram illustrating a schematic configuration of the heat sensor according to the embodiment.
FIG. 5A is a view illustrating a vertical airflow flowing towards the heat sensor according to the embodiment.
FIG. 5B is a view illustrating a horizontal airflow flowing towards the heat sensor of the embodiment.
FIG. 6 is a view illustrating the heat sensor according to the embodiment with (a) providing an elevation view and (b) providing a bottom view.
FIG. 7 is a partially enlarged sectional view of the heat sensor illustrated in (a) of FIG. 6.
FIG. 8 is a view illustrating a region where first holes and second holes are provided in the heat sensor according to the embodiment.
FIG. 9 is a partially enlarged sectional view of a heat sensor according to a variation of the embodiment.

### DESCRIPTION OF EXEMPLARY EMBODIMENT

### [Background Reaching Present Invention]

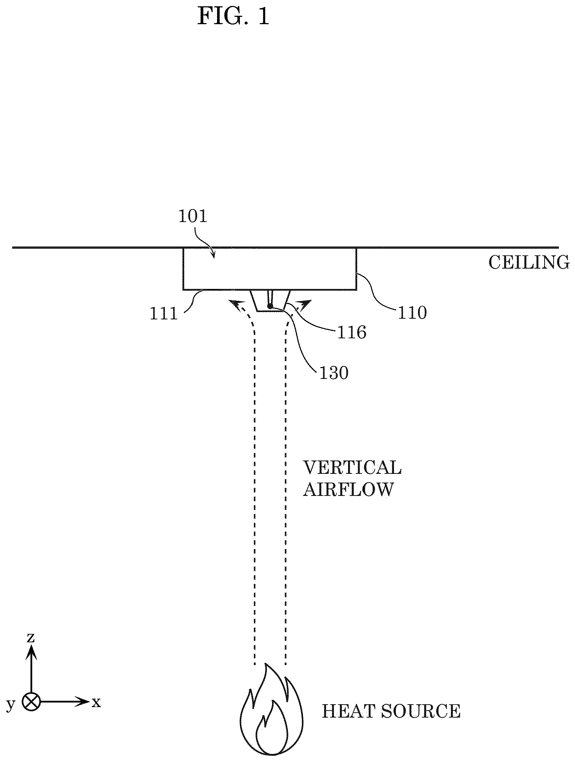

First, background reaching the present disclosure will be described with reference to a comparative example of FIG. 1. FIG. 1 is a view illustrating heat sensor 101 of the comparative example.

Heat sensor 101 of the comparative example includes: housing 110 of a cylindrical shape having bottom part 111; and heat detection unit 130 which detects heat of gas. Heat detection unit 130 is, for example, a thermistor provided with a lead wire, which is arranged perpendicularly below bottom part 111 and arranged at the center of housing 110 when viewed vertically from the bottom. Moreover, housing 110 is provided with protection frame 116 which covers heat detection unit 130.

As illustrated in FIG. 1, when there is a heat source such as frame perpendicularly below heat sensor 101, a vertical airflow (updraft) flowing towards heat sensor 101 is generated. The vertical airflow changes a flow direction near heat sensor 101 under the influence of the outer shape of heat sensor 101, resulting in a change to a flow in a diagonal direction including a flow component directed from the center towards the outer periphery of housing 110. Thus, heat detection unit 130 needs to be arranged in heat sensor 101 of the comparative example in a manner remarkably projecting perpendicularly downward to make contact with the vertical airflow. Consequently, there arises a problem that the projection dimension of protection frame 116 covering heat detection unit 130 increases, resulting in an increase in the thickness of heat sensor 101.

On the contrary, a heat detection unit is arranged in a peripheral region different from the center of a housing in a heat sensor of the present disclosure when the heat sensor is viewed perpendicularly from a bottom. The vertical airflow flows while approaching the housing in the peripheral region, and thus it is possible to reduce the projection dimension of the heat sensor required for the contact with the vertical airflow. Consequently, it is possible to make the heat sensor thinner. Consequently, it is possible to make the heat sensor thinner. Moreover, the holes for causing airflow to flow into the housing are provided in the aforementioned peripheral region in the heat sensor of the present embodiment, which therefore makes it possible to reliably bring the airflow flowing into the housing into contact with the heat detection unit to detect heat of gas.

Hereinafter, the heat sensor according to the embodiment of the present disclosure will be described in detail with reference to the drawings. Note that each embodiment described below illustrates one detailed example of the present disclosure. Therefore, numerical values, shapes, materials, components, arrangement and connection modes of the components, etc., each form one example and are not intended to limit the present disclosure. Therefore, of the components in the embodiment described below, those not disclosed in any independent claim indicating the highest concept of the present disclosure will be described as optional components.

Moreover, each drawing is a schematic diagram and does not necessarily provide a precise illustration. Therefore, for example, scaling do not necessarily agree with each other in the different drawings. Moreover, substantially same configurations are practically provided with same signs in the drawings and overlapping explanation will be omitted or simplified.

Moreover, an x-axis, a y-axis, and a z-axis illustrate three axes of a three-dimensional orthogonal coordinate system in the present description and drawings. In the present embodiment, a z-axis direction is a vertical direction and a direction vertical to the z-axis (a direction parallel to a plane xy) is a horizontal direction. Note that a negative direction of the z-axis is directed vertically downward.

### EMBODIMENT

### [1-1. Configuration of Heat Sensor]

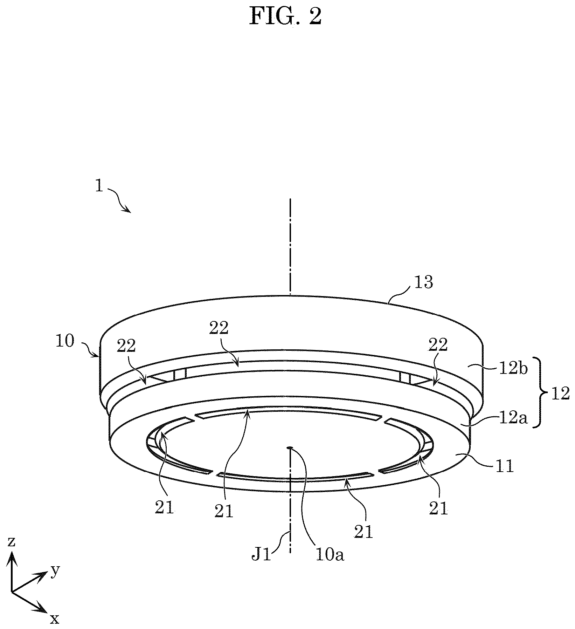

The configuration of the heat sensor according to the embodiment will be described with reference to FIGS. 2 to 8. The heat sensor according to the present embodiment is a fire report device which detects, for example, fire in a building and reports, to an outside, that the fire has occurred.

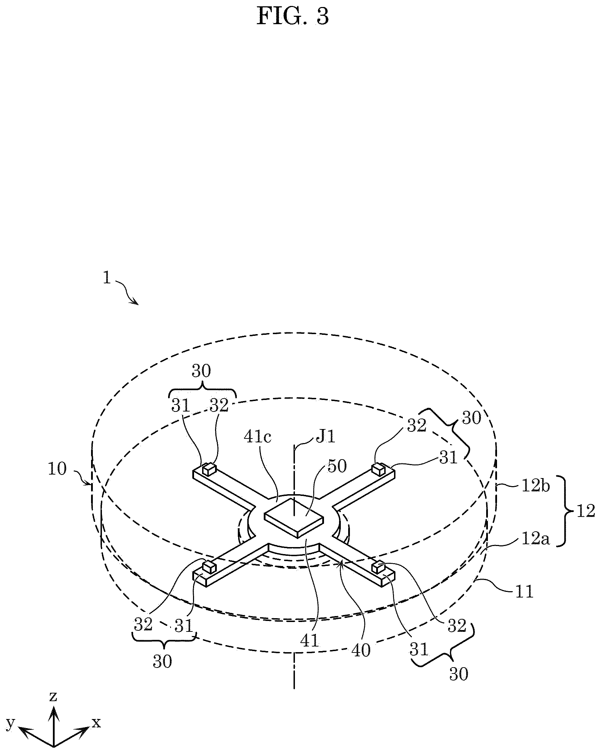

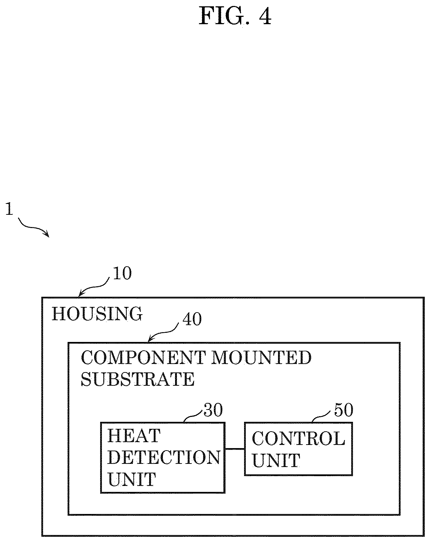

FIG. 2 is a perspective view of heat sensor 1 according to the embodiment. FIG. 3 is a perspective view illustrating component mounted substrate 40 arranged inside of heat sensor 1. FIG. 4 is a diagram illustrating a schematic configuration of heat sensor 1.

As illustrated in FIGS. 2 and 3, heat sensor 1 includes: housing 10 of a cylindrical shape which forms the outline of heat sensor 1; and component mounted substrate 40 which is provided in housing 10. As illustrated in FIG. 4, component mounted substrate 40 includes: heat detection unit 30 which detects heat of gas; and control unit 50 which determines the presence or absence of fire based on a result obtained at heat detection unit 30.

Heat detection unit 30 has a heat detection element such as a chip thermistor. The heat detection element is connected to control unit 50 via a wire formed at component mounted substrate 40. Note that FIG. 4 illustrates one heat detection unit 30 as one example, but in accordance with the invention a plurality of heat detection units 30 are actually connected to control unit 50. A configuration of heat detection unit 30 will be described in detail later on.

Control unit 50 is composed of IC chips such as, for example, a central processing unit (CPU), a random access memory (RAM), and a read only memory (ROM). For example, control unit 50 determines the presence or absence of fire depending on whether or not an average value of voltages outputted from a plurality of heat detection elements is higher than a predefined threshold value. Note that control unit 50 may compare a maximum value or a minimum value of the voltages outputted from the plurality of heat detection elements with the predefined threshold values to determine the presence or absence of fire.

Moreover, control unit 50 includes a report circuit (not illustrated) for reporting a result of the determination of the presence or absence of fire. The report circuit is connected to, for example, a server serving as an external management device. Control unit 50 notifies the server of the presence or absence of fire via the report circuit. The report circuit may be connected with, for example, a speaker or a light-emitting diode (LED) for notifying the surroundings that the fire has occurred.

Heat sensor 1 having the aforementioned configuration is disposed, for example, on the ceiling or a wall of a building such as a factory or a household. Hereinafter, a description will be provided, referring to, as an example, a case where heat sensor 1 is disposed on the ceiling of the building.

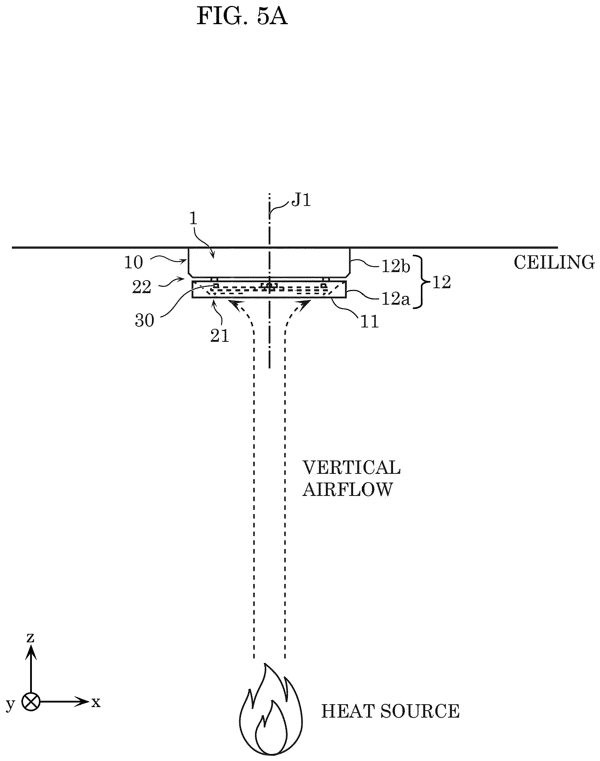

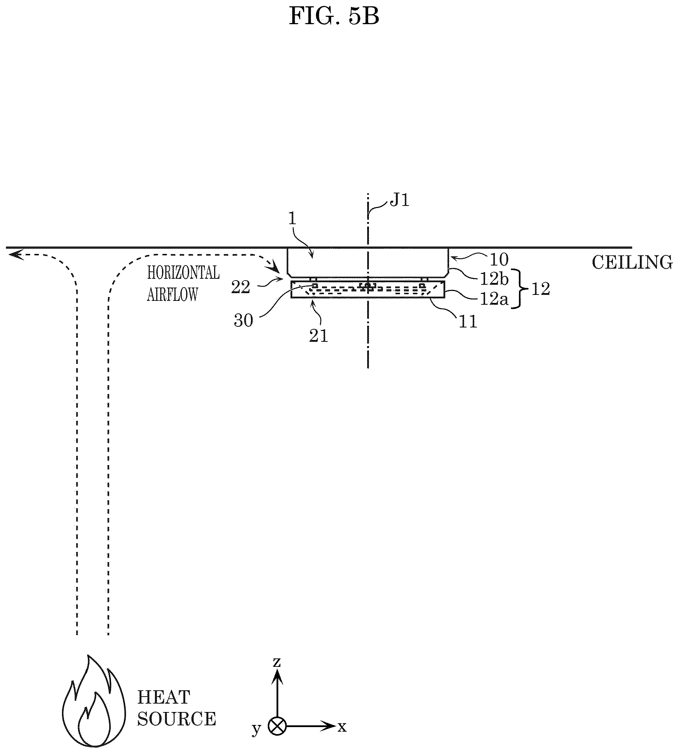

FIG. 5A is a view illustrating a vertical airflow flowing towards heat sensor 1. FIG. 5B is a view illustrating a horizontal airflow flowing towards heat sensor 1.

As illustrated in FIG. 5A, when a heat source is located perpendicularly below heat sensor 1, a vertical airflow generated by the heat source flows towards heat sensor 1. As illustrated in FIG. 5B, when the heat source is located at a position different from a position located perpendicularly below heat sensor 1, a horizontal airflow flowing along the ceiling flows towards heat sensor 1.

Heat sensor 1 according to the present embodiment has a structure thinner than that of a conventional one and also has a structure capable of sensing the heat of gas caused to flow by at least either one of the vertical airflow and the horizontal airflow. Hereinafter, the structure of heat sensor 1 will be described in detail.

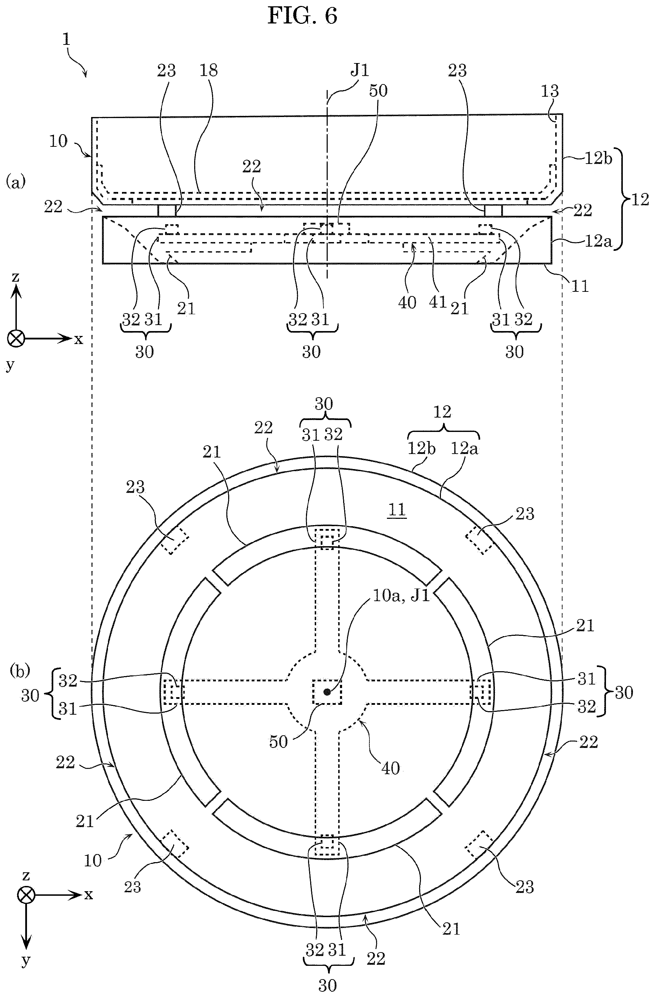

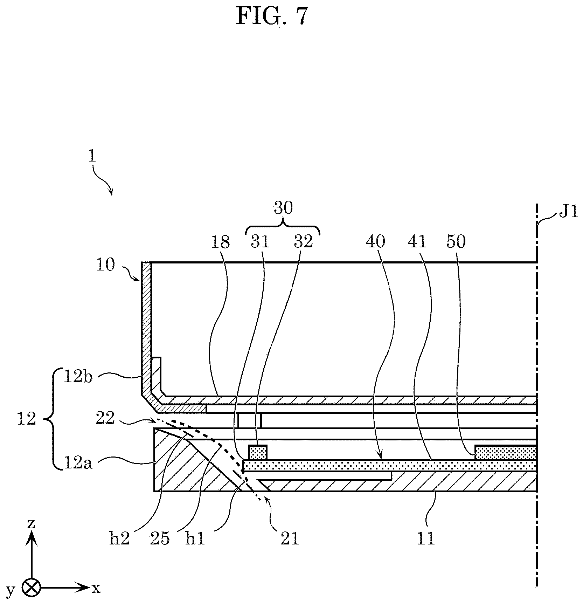

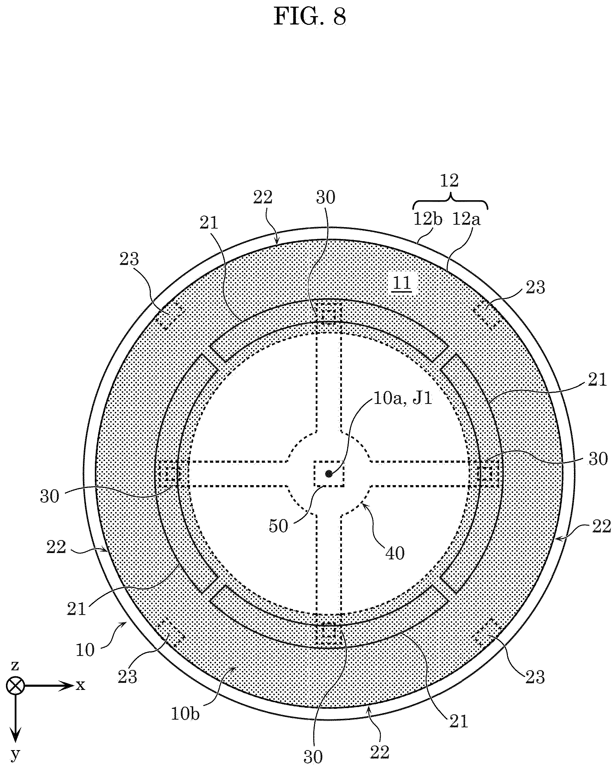

FIG. 6 is a view illustrating heat sensor 1 with (a) providing an elevation view and (b) providing a bottom view. FIG. 7 is a partially enlarged sectional view of heat sensor 1 illustrated in (a) of FIG. 6. FIG. 8 is a view illustrating a region where first holes 21 and second holes 22 are provided in heat sensor 1. Note that FIG. 7 illustrates only a cross section and does not illustrate a configuration provided in a depth direction.

As illustrated in FIGS. 6 and 7, heat sensor 1 includes housing 10 and component mounted substrate 40.

Housing 10 is of a cylindrical shape and has bottom part 11 and side part 12. Side part 12 has first side part 12a and second side part 12b. First side part 12a is linked to bottom part 11 via a corner at 90 degrees. Second side part 12b is provided on a side (a ceiling side) opposite to bottom part 11 when viewed from first side part 12a. The outer periphery of second side part 12b is larger than the outer periphery of first side part 12a, and the diameter of second side part 12b is greater than the diameter of first side part 12a.

Moreover, housing 10 has opening part 13 which is located oppositely to bottom part 11. Opening part 13 is a portion in contact with the ceiling when heat sensor 1 is installed on the ceiling of the building. Housing 10 is formed of, for example, heat-resistant resin.

Housing 10 has first holes 21 and second holes 22 as inlets and outlets for causing gas flowing from one side to flow out of another side. Second holes 22 are connected to first holes 21 via inner path 25, to be described later on.

Each of first holes 21 and second holes 22 is not provided at center 10a of housing 10 but provided in peripheral region 10b different from center 10a when heat sensor 1 is viewed form central axis J1 of housing 10. In the present embodiment, peripheral region (region indicated by hatching dots of FIG. 8) 10b is located more closely to the outer periphery than to center 10a. More specifically, first holes 21 and second holes 22 are provided in a region ranging between greater than or equal to 0.5 times and less than or equal to one times the diameter of the housing body.

As illustrated in FIG. 2 and (b) of FIG. 6, a plurality of first holes 21 are provided at bottom part 11 having a circular shape. Each first hole 21 is formed along the outer periphery of bottom part 11 and has an arc shape when heat sensor 1 is viewed from center axis J1.

As illustrated in FIG. 7, when housing 10 is viewed from the cross section along central axis J1, first holes 21 are provided at bottom part 11 with hole axis h1 of first holes 21 inclined with respect to central axis J1. For example, an inclination angle of hole axis h1 of first holes 21 with respect to central axis J1 is greater than or equal to 30 degrees and less than or equal to 60 degrees. The direction of hole axis h1 of first hole 21 is identical to a direction in which the vertical airflow flows in peripheral region 10b when heat sensor 1 is installed on the ceiling.

As illustrated in FIG. 2, a plurality of second holes 22 are provided at side part 12. As illustrated in FIG. 7, when housing 10 is viewed at the cross section along central axis J1, each second hole 22 is provided between first side part 12a and second side part 12b with hole axis h2 of second hole 22 inclined with respect to central axis J1. For example, an inclination angle of hole axis h2 of second hole 22 with respect to central axis J1 is greater than or equal to 30 degrees and less than or equal to 60 degrees. The direction of hole axis h2 of second hole 22 is identical to a direction in which a horizontal airflow flows in peripheral region 10b when heat sensor 1 is installed on the ceiling.

Moreover, each second hole 22 is formed along the outer periphery of side part 12 having a cylindrical shape. A plurality of props 23 are provided between second holes 22 adjacent in a circumferential direction. The plurality of props 23 connect together first side part 12a and second side part 12b of side part 12. Note that first side part 12a is provided vertically to bottom part 11. Moreover, first side part 12a is located more closely to the outer periphery than first hole 21 when viewed from central axis J1. Moreover, first side part 12a is located more closely to bottom part 11 than second hole 22 when viewed from a direction orthogonal to central axis J1. Note that first side part 12a does not necessarily have to be vertical to bottom part 11. First side part 12a may be provided so that an angle formed by first side part 12a and bottom part 11 is acute or may be provided so that such an angle is obtuse.

As illustrated in FIG. 7, housing 10 has inner path 25 which links together first hole 21 and second hole 22. Gas directed to heat sensor 1 by a vertical airflow flows in from first hole 21 and flows out of second hole 22 through inner path 25. On the other hand, gas directed to heat sensor 1 by a horizontal airflow flows in from second hole 22 and flows out of first hole 21 via inner path 25. Alternatively, the gas directed towards heat sensor 1 by the horizontal airflow flows in from second hole 22 and flows out of another second hole 22 located oppositely to second hole 22 in which the gas has flown. Heat detection unit 30 described above is arranged at a position in contact with the gas flowing through inner path 25. Heat detection unit 30 is formed as part of component mounted substrate 40.

Component mounted substrate 40 is arranged inside of housing 10 and fixed at an inner bottom of bottom part 11 of housing 10 by a fastening member or the like. Component mounted substrate 40 is arranged with the main surface of component mounted substrate 40 orthogonal to central axis J1, that is, along a horizontal direction. Cover 18 is provided inside of housing 10 so as to cover component mounted substrate 40.

Component mounted substrate 40 includes: substrate body 41, control unit 50 which is mounted on substrate body 41; and a plurality of heat detection elements 32 which are mounted on substrate body 41.

As illustrated in FIG. 3, substrate body 41 has: central part 41c of a plate-like shape; and support units 31 of a bar-like shape extending in all directions from the outer periphery of central part 41c. Control unit 50 is mounted at central part 41c of substrate body 41 and each of the plurality of heat detection elements 32 is mounted at an end part of each support unit 31. That is, when heat sensor 1 is viewed from central axis J1, control unit 50 is arranged at the center of housing 10, and heat detection element 32 is arranged more closely to the outer periphery than control unit 50. Moreover, when heat sensor 1 is viewed from central axis J1, heat detection unit 30 is arranged in correspondence with the position of first hole 21.

Heat detection unit 30 has: heat detection element 32 and support unit 31 which supports respective heat detection elements 32. Note that support unit 31 is part of substrate body 41. Heat detection element 32 and support unit 31 are arranged inside of housing 10. More specifically, the end part of support unit 31 is arranged so as to make contact with gas passing through inner path 25. Consequently, heat detection unit 30 can detect heat of the gas passing through inner path 25.

Moreover, as illustrated in FIG. 8, when heat sensor 1 is viewed from central axis J1, heat detection units 30 are arranged in peripheral region 10b different from center 10a of housing 10. Note that peripheral region 10b of the present embodiment is located more closely to the outer periphery than to center 10a.

Since the vertical airflow flows while approaching housing 10 in peripheral region 10b, it is possible to reduce the projection dimension of heat detection unit 30 required for the contact with the vertical airflow. That is, arranging heat detection unit 30 in peripheral region 10b as is the case with the present embodiment makes it is possible to reduce the projection dimension of heat detection unit 30 in a direction of central axis J1, comparted to, for example, a case where heat detection unit 30 is arranged at center 10a of housing 10. Consequently, it is possible to make heat sensor 1 thinner. Moreover, in heat sensor 1 of the present embodiment, first holes 21 or second holes 22 for causing the airflow inside of housing 10 to flow in are provided in peripheral region 10b. Consequently, it is possible to reliably bring the airflow, which has flown into housing 10, into contact with heat detection unit 30 to detect heat of the gas. Moreover, component mounted substrate 40 is arranged with the main surface of component mounted substrate 40 orthogonal to central axis J1, which makes it possible to make heat sensor 1 thinner.

### [1-2. Effects, etc.]

Heat sensor 1 according to the present embodiment includes: housing 10 of a cylindrical shape having bottom part 11 and side part 12; and heat detection units 30 which are provided inside of housing 10 and detect heat of gas. Housing 10 has first holes 21 and second holes 22 from one side of which gas flows in and from another side of which the gas flows out, and first holes 21 are provided in at least one of bottom part 11 and side part 12, and second holes 22 are provided in at least one of bottom part 11 and side part 12. Each of first holes 21 and second holes 22 is provided in peripheral region 10b different from center 10a of housing 10 when heat sensor 1 is viewed from central axis J1 of housing 10. Heat detection units 30 are provided in peripheral region 10b when heat sensor 1 is viewed from central axis J1.

As described above, arranging heat detection units 30 in peripheral region 10b makes it possible to reduce the projection dimension of heat detection units 30 in the direction of central axis J1. Consequently, it is possible to make heat sensor 1 thinner. Moreover, since first holes 21 or second holes 22 are provided in peripheral region 10b, it is possible to reliably bring the airflow, which has flown into housing 10, into contact with heat detection units 30 to detect heat of gas.

Moreover, first holes 21 are provided at bottom part 11 and second holes 22 are provided at side part 12.

As described above, providing first holes 21 at bottom part 11 and second holes 22 at side part 12 makes it possible to provide heat sensor 1 capable of handling both a vertical airflow and a horizontal airflow.

Moreover, housing 10 has inner path 25 which links together first holes 21 and second holes 22, and heat detection units 30 may be arranged at positions in contact with gas flowing through inner path 25.

Consequently, it is possible to detect the heat of the gas flowing through inner path 25 by use of heat detection units 30.

Moreover, first holes 21 may be provided at positions closer to the outer periphery than to center 10a of bottom part 11 when heat sensor 1 is viewed from central axis J1.

Consequently, it is possible to reduce the projection dimension of heat detection unit 30 brought into contact with the vertical airflow flowing near the outer periphery of housing 10. Consequently, it is possible to reduce the projection dimension of heat detection unit 30 in the direction of central axis J1 and make heat sensor 1 thinner.

Moreover, bottom part 11 may have a circular shape and first holes 21 may be provided along the outer periphery of bottom part 11.

Consequently, it is possible to cause the vertical airflow flowing near the outer periphery of housing 10 to smoothly flow into first holes 21.

Moreover, side part 12 may have a cylindrical shape and second holes 22 may be provided along the outer periphery of side part 12.

Consequently, it is possible to cause the horizontal airflow flowing near the outer periphery of housing 10 to smoothly flow into second holes 22.

Moreover, the direction of hole axis h1 of first hole 21 may be identical to a direction in which the vertical airflow flows in peripheral region 10b when heat sensor 1 is installed on the ceiling.

Consequently, it is possible to cause the vertical airflow flowing near the outer periphery of housing 10 to smoothly flow into first hole 21.

Moreover, the direction of hole axis h2 of second hole 22 may be identical to a direction in which the horizontal airflow flows in peripheral region 10b when heat sensor 1 is installed on the ceiling.

Consequently, it is possible to cause the horizontal airflow flowing near the outer periphery of housing 10 to smoothly flow into second holes 22.

Moreover, side part 12 includes: first side part 12a which is connected to bottom part 11; and second side part 12b which has a larger outer periphery shape than first side part 12a and is provided on a side opposite to bottom part 11 when viewed from first side part 12a. Second holes 22 are provided between first side part 12a and second side part 12b.

Consequently, it is possible to cause the horizontal airflow flowing towards side part 12 of housing 10 to smoothly flow into second holes 22.

Moreover, first side part 12a may be located more closely to the outer periphery than first holes 21 and may be located more closely to bottom part 11 than second holes 22.

Consequently, it is possible to cause the vertical airflow flowing near the outer periphery of housing 10 to smoothly flow into first holes 21.

### [1-3. Variation of Embodiment]

Next, heat sensor 1A according to a variation of the embodiment will be described. The variation will be described, referring to an example in which hole axis h1 of first hole 21 and hole axis h2 of second hole 22 are parallel to each other.

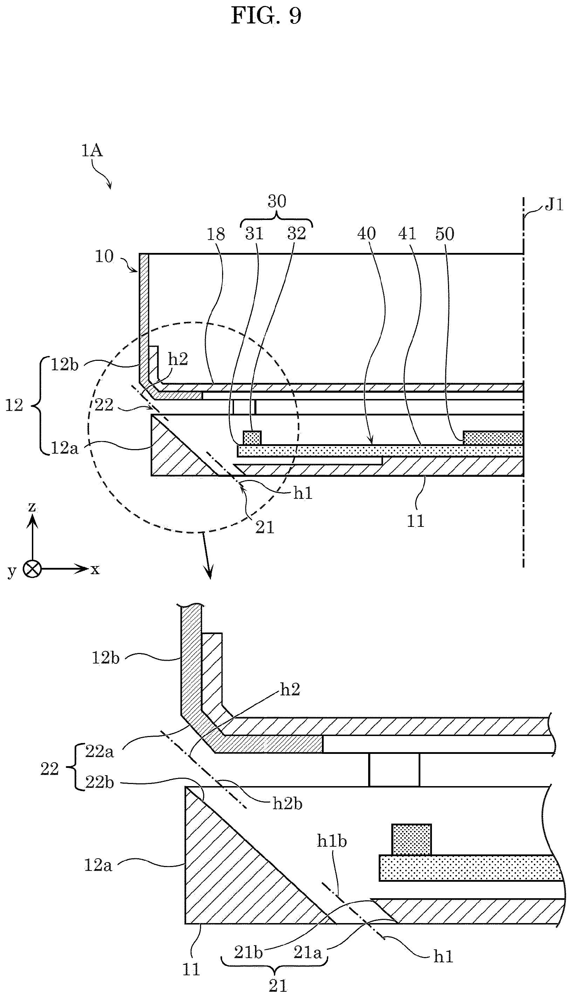

FIG. 9 is a partially enlarged sectional view of heat sensor 1A according to the variation of the embodiment. Note that FIG. 9 is a view of heat sensor 1A viewed from the same direction as the direction in FIG. 7 in the embodiment described above.

In heat sensor 1A of the variation, first hole 21 has: first outer hole 21a which is located on an outer surface of housing 10; and first inner hole 21b which is located on an inner side of housing 10 relative to first outer hole 21a. The first inner hole is provided with hole axis h1b of first inner hole 21b directed towards second hole 22 when housing 10 is viewed at a cross section along central axis J1.

Moreover, second hole 22 has: second outer hole 22a which is located on an outer surface of housing 10; and second inner hole 22b which is located on an inner side of housing 10 relative to second outer hole 22a. Second inner hole 22b is provided with hole axis h2b of second inner hole 22b directed towards first hole 21 when housing 10 is viewed at the cross section along central axis J1.

Moreover, in the present variation, hole axis h1 of first hole 21 and hole axis h2 of second hole 22 are parallel to each other when housing 10 is viewed at the cross section along central axis J1. Moreover, in the present variation, hole axis h1 of first hole 21 and hole axis h1b of first inner hole 21b are on the same axis and hole axis h2 of second hole 22 and hole axis h2b of second inner hole 22b are on the same axis.

Also in heat sensor 1A of the variation, each of first holes 21 and second holes 22 is provided in peripheral region 10b different from center 10a of housing 10 when heat sensor 1 is viewed from central axis J1 of housing 10. Moreover, heat detection units 30 are provided in peripheral region 10b when heat sensor 1 is viewed from central axis J1.

As described above, arranging heat detection units 30 in peripheral region 10b makes it possible to reduce the projection dimension of heat detection units 30 in the direction of central axis J1. Consequently, it is possible to make heat sensor 1A thinner. Moreover, since first holes 21 or second holes 22 are provided in peripheral region 10b, it is possible to reliably bring the airflow, which has flown into housing 10, into contact with heat detection unit 30 to detect heat of gas.

Moreover, first hole 21 may have: first outer hole 21a which is located on an outer surface of housing 10; and first inner hole 21b which is located on an inner side of housing 10 relative to first outer hole 21a. First inner hole 21b may be provided with hole axis h1b of first inner hole 21b directed towards second hole 22 when housing 10 is viewed at the cross section along central axis J1.

Consequently, it is possible to cause gas passing through first hole 21 to smoothly flow into second hole 22.

Moreover, second hole 22 may have: second outer hole 22a which is located on an outer surface of housing 10; and second inner hole 22b which is located on an inner side of housing 10 relative to second outer hole 22a. Second inner hole 22b may be provided with hole axis h2b of second inner hole 22b directed towards first hole 21 when housing 10 is viewed at the cross section along central axis J1.

Consequently, it is possible to cause gas passing through second hole 22 to smoothly flow into first hole 21.

Moreover, hole axis h1 of first hole 21 and hole axis h2 of second hole 22 may be parallel to each other when housing 10 is viewed at the cross section along central axis J1.

Consequently, it is possible to cause gas passing through first hole 21 to smoothly flow into second hole 22, and it is also possible to cause gas passing through second hole 22 to smoothly flow into first hole 21.

### OTHER EMBODIMENT

Heat sensor 1 of the present disclosure has been described above based on the aforementioned embodiment, but the present disclosure is not limited to the embodiment described above.

For example, heat sensors 1 and 1A may also function as a smoke detection unit which detects smoke. Moreover, heat sensors 1 and 1A may be disposed not only on the ceiling but also on a wall. Heat sensors 1 and 1A may be supplied with a power by a commercial power source or may be supplied with a power by a battery provided inside of housing 10.

For example, the shapes of housing 10 of heat sensors 1 and 1A are not limited to a cylindrical shape and may be a square tubular shape.

### REFERENCE MARKS IN THE DRAWINGS

- 1, 1A: heat sensor
- 10: housing
- 10a: center
- 10b: peripheral region
- 11: bottom part
- 12: side part
- 12a: first side part
- 12b: second side part
- 13: opening part
- 21: first hole
- 21a: first outer hole
- 21b: first inner hole
- 22: second hole
- 22a: second outer hole
- 22b: second inner hole
- 25: inner path
- 30: heat detection unit
- J1: central axis
- h1, hlb, h2, h2b: hole axis

## Claims

1. A heat sensor (1), comprising:
a housing (10) of a cylindrical shape which has a bottom part (11) and a side part (12); and
a plurality of heat detection units (30) provided in the housing (10) and each including a heat detection element (32) configured to detect heat and a support unit (31) which supports the heat detection element (32), wherein the support units (31) are all extending from a central part of a substrate body (41),
wherein the housing (10) has a plurality of holes (21, 22), which comprises a plurality of first holes (21) and a plurality of second holes (22) for causing gas flowing via an inner path (25) from one side of the housing (10) gas flows in and from another side of the housing (10) the gas flows out,
the first holes (21) are provided in the bottom part (11),
the second holes (22) are provided in the side part (12),
when the heat sensor (1) is viewed in an axial direction of a central axis (J1) that is a rotation symmetry axis of the housing (10),
each of the first holes (21) and the second holes (22) is provided in a peripheral region (10b) different from a center (10a) of the housing (10), and the heat detection units (30) are provided in the peripheral region (10b),
the side part (12) has: a first side part (12a) which is connected to the bottom part (11); and a second side part (12b) which has a larger outer periphery shape than the first side part (12a) and is provided on a side opposite to the bottom part (11) when viewed from the first side part (12a), and
the heat detection elements (32) are mounted at an end part of each support unit (31) and are disposed in a region enclosed by the first side part (12a) and arranged at a position in contact with gas flowing through the inner path (25), and the second holes (22) are provided between the first side part (12a) and the second side part (12b) of the side part (12).

2. The heat sensor (1) according to claim 1,
wherein the heat detection units (30) are arranged at a position in contact with gas flowing through the inner path (25).

3. The heat sensor (1) according to claim 1 or 2,
wherein the first holes (21) are provided at a position closer to an outer periphery of the bottom part (11) than to a center of the bottom part (11) when the heat sensor (1) is viewed in an axial direction of the central axis (J1).

4. The heat sensor (1) according to any one of claims 1 to 3,
wherein the bottom part (11) has a circular shape, and
the first holes (21) are provided along the outer periphery of the bottom part (11).

5. The heat sensor (1) according to any one of claims 1 to 4,
wherein the side part (12) has a cylindrical shape, and
the second holes (22) are provided along outer periphery of the side part (12).

6. The heat sensor (1) according to any one of claims 1 to 5,
wherein a hole axis (h1) of the first holes (21) and a hole axis (h2) of the second holes (22) are parallel to each other when the housing (10) is viewed at a cross section along the central axis (J1), the hole axis (h1) being a central axis of the first holes (21) at the cross section, the hole axis (h2) being a central axis of the second holes (22) at the cross section.

7. The heat sensor (1) according to any one of claims 1 to 6,
wherein a hole axis direction of the first holes (21) is identical to a direction in which a vertical airflow flows in the peripheral region (10b) when the heat sensor (1) is installed on a ceiling.

8. The heat sensor (1) according to any one of claims 1 to 7,
wherein a hole axis direction of the second holes (22) is identical to a direction in which a horizontal airflow flows in the peripheral region (10b) when the heat sensor (1) is installed on a ceiling.

9. The heat sensor (1) according to any one of claims 1 to 8,
wherein the first side part (12a) is located more closely to an outer periphery than the first holes (21) and located more closely to the bottom part (11) than the second holes (22).

## Patentansprüche

1. Wärmesensor (1), umfassend:
ein Gehäuse (10) von zylindrischer Form, das einen Bodenteil (11) und einen Seitenteil (12) aufweist; und
eine Mehrzahl von Wärmedetektionseinheiten (30), die in dem Gehäuse (10) bereitgestellt sind und jeweils ein Wärmedetektionselement (32), das konfiguriert ist, Wärme zu detektieren, und eine Stütz- bzw. Trägereinheit (31) beinhalten, die das Wärmedetektionselement (32) stützt bzw. trägt, wobei sich die Trägereinheiten (31) alle von einem zentralen Teil eines Substratkörpers (41) erstrecken,
wobei das Gehäuse (10) eine Mehrzahl von Löchern (21, 22) aufweist, die eine Mehrzahl von ersten Löchern (21) und eine Mehrzahl von zweiten Löchern (22) umfasst, um zu veranlassen, dass Gas über einen inneren Weg bzw. Kanal (25) von einer Seite des Gehäuses (10) einströmt und das Gas von einer anderen Seite des Gehäuses (10) ausströmt,
die ersten Löcher (21) in dem Bodenteil (11) bereitgestellt sind,
die zweiten Löcher (22) in dem Seitenteil (12) bereitgestellt sind,
wenn der Wärmesensor (1) in einer axialen Richtung einer Mittelachse (J1), die eine Rotationssymmetrieachse des Gehäuses (10) ist, betrachtet wird,
jedes der ersten Löcher (21) und der zweiten Löcher (22) in einem Umfangsbereich (10b) bereitgestellt ist, der sich von einer Mitte (10a) des Gehäuses (10) unterscheidet, und die Wärmedetektionseinheiten (30) in dem Umfangsbereich (10b) bereitgestellt sind,
der Seitenteil (12) aufweist: einen ersten Seitenteil (12a), der mit dem Bodenteil (11) verbunden ist; und einen zweiten Seitenteil (12b), der eine größere Außenumfangsform als der erste Seitenteil (12a) aufweist und auf einer Seite gegenüberliegend bzw. entgegengesetzt zu dem Bodenteil (11) bereitgestellt ist, und zwar bei Betrachtung von dem ersten Seitenteil (12a) aus, und die Wärmedetektionselemente (32) an einem Endteil jeder Trägereinheit (31) montiert und in einem Bereich angeordnet sind, der durch den ersten Seitenteil (12a) umschlossen ist und an einer Position in Kontakt mit dem durch den inneren Weg (25) strömenden Gas angeordnet ist, und
die zweiten Löcher (22) zwischen dem ersten Seitenteil (12a) und dem zweiten Seitenteil (12b) des Seitenteils (12) bereitgestellt sind.

2. Wärmesensor (1) nach Anspruch 1,
wobei die Wärmedetektionseinheiten (30) an einer Position in Kontakt mit dem durch den inneren Weg (25) strömenden Gas angeordnet sind.

3. Wärmesensor (1) nach Anspruch 1 oder 2,
wobei die ersten Löcher (21) an einer Position näher an einem Außenumfang des Bodenteils (11) als an einer Mitte des Bodenteils (11) bereitgestellt sind, wenn der Wärmesensor (1) in einer axialen Richtung der Mittelachse (J1) betrachtet wird.

4. Wärmesensor (1) nach einem der Ansprüche 1 bis 3,
wobei der Bodenteil (11) eine Kreisform aufweist und
die ersten Löcher (21) entlang des Außenumfangs des Bodenteils (11) bereitgestellt sind.

5. Wärmesensor (1) nach einem der Ansprüche 1 bis 4,
wobei der Seitenteil (12) eine Zylinderform aufweist und
die zweiten Löcher (22) entlang des Außenumfangs des Seitenteils (12) bereitgestellt sind.

6. Wärmesensor (1) nach einem der Ansprüche 1 bis 5,
wobei eine Lochachse (h1) der ersten Löcher (21) und eine Lochachse (h2) der zweiten Löcher (22) parallel zueinander sind, wenn das Gehäuse (10) in einem Querschnitt entlang der Mittelachse (J1) betrachtet wird, wobei die Lochachse (h1) eine Mittelachse der ersten Löcher (21) an bzw. in dem Querschnitt ist, wobei die Lochachse (h2) eine Mittelachse der zweiten Löcher (22) an bzw. in dem Querschnitt ist.

7. Wärmesensor (1) nach einem der Ansprüche 1 bis 6,
wobei eine Lochachsenrichtung der ersten Löcher (21) mit einer Richtung identisch ist, in der ein vertikaler Luftstrom in dem Umfangsbereich (10b) strömt, wenn der Wärmesensor (1) an einer Decke installiert ist.

8. Wärmesensor (1) nach einem der Ansprüche 1 bis 7,
wobei eine Lochachsenrichtung der zweiten Löcher (22) mit einer Richtung identisch ist, in der ein horizontaler Luftstrom in dem Umfangsbereich (10b) strömt, wenn der Wärmesensor (1) an einer Decke installiert ist.

9. Wärmesensor (1) nach einem der Ansprüche 1 bis 8,
wobei sich der erste Seitenteil (12a) näher an einem Außenumfang als die ersten Löcher (21) befindet und sich näher an dem Bodenteil (11) als die zweiten Löcher (22) befindet.

## Revendications

1. Capteur de chaleur (1), comprenant :
un boîtier (10) de forme cylindrique comportant une partie inférieure (11) et une partie latérale (12) ; et
une pluralité d'unités de détection de chaleur (30) disposées dans le boîtier (10) et incluant respectivement un élément de détection de chaleur (32) configuré pour détecter la chaleur et une unité de support (31) supportant l'élément de détection de chaleur (32), dans lequel les unités de support (31) s'étendent toutes à partir d'une partie centrale d'un corps de substrat (41),
dans lequel le boîtier (10) comporte une pluralité de trous (21, 22), lesquels comprennent une pluralité de premiers trous (21) et une pluralité de deuxièmes trous (22) permettant à du gaz de s'écouler par le biais d'un trajet interne (25), le gaz entrant par un côté du boîtier (10) et sortant par un autre côté du boîtier (10),
les premiers trous (21) sont disposés dans la partie inférieure (11),
les deuxièmes trous (22) sont disposés dans la partie latérale (12),
lorsque le capteur de chaleur (1) est vu dans une direction axiale d'un axe central (J1) constituant un axe de symétrie de rotation du boîtier (10),
chacun des premiers trous (21) et des deuxièmes trous (22) est disposé dans une région périphérique (10b) différente d'un centre (10a) du boîtier (10), et les unités de détection de chaleur (30) sont disposées dans la région périphérique (10b),
la partie latérale (12) comporte : une première partie latérale (12a) reliée à la partie inférieure (11) ; et une deuxième partie latérale (12b), laquelle présente une plus grande forme de périphérie extérieure que la première partie latérale (12a) et est disposée sur un côté opposé à la partie inférieure (11), vue depuis la première partie latérale (12a), et
les éléments de détection de chaleur (32) sont montés au niveau d'une partie d'extrémité de chaque unité de support (31) et sont disposés dans une région entourée par la première partie latérale (12a) et agencée à une position en contact avec du gaz s'écoulant à travers le trajet interne (25), et les deuxièmes trous (22) sont disposés entre la première partie latérale (12a) et la deuxième partie latérale (12b) de la partie latérale (12).

2. Capteur de chaleur (1) selon la revendication 1,
dans lequel les unités de détection de chaleur (30) sont agencées à une position en contact avec du gaz s'écoulant à travers le trajet interne (25).

3. Capteur de chaleur (1) selon la revendication 1 ou 2,
dans lequel les premiers trous (21) sont disposés à une position plus proche d'une périphérie extérieure de la partie inférieure (11) que d'un centre de la partie inférieure (11) lorsque le capteur de chaleur (1) est vu dans une direction axiale de l'axe central (J1).

4. Capteur de chaleur (1) selon l'une quelconque des revendications 1 à 3,
dans lequel la partie inférieure (11) présente une forme circulaire, et
les premiers trous (21) sont disposés le long de la périphérie extérieure de la partie inférieure (11).

5. Capteur de chaleur (1) selon l'une quelconque des revendications 1 à 4,
dans lequel la partie latérale (12) présente une forme cylindrique, et
les deuxièmes trous (22) sont disposés le long de la périphérie extérieure de la partie latérale (12).

6. Capteur de chaleur (1) selon l'une quelconque des revendications 1 à 5,
dans lequel un axe de trou (h1) des premiers trous (21) et un axe de trou (h2) des deuxièmes trous (22) sont parallèles entre eux lorsque le boîtier (10) est vu au niveau d'une section transversale le long de l'axe central (J1), l'axe de trou (h1) étant un axe central des premiers trous (21) au niveau de la section transversale, l'axe de trou (h2) étant un axe central des deuxièmes trous (22) au niveau de la section transversale.

7. Capteur de chaleur (1) selon l'une quelconque des revendications 1 à 6,
dans lequel une direction d'axe de trou des premiers trous (21) est identique à une direction dans laquelle un flux d'air vertical s'écoule dans la région périphérique (10b) lorsque le capteur de chaleur (1) est installé sur un plafond.

8. Capteur de chaleur (1) selon l'une quelconque des revendications 1 à 7,
dans lequel une direction d'axe de trou des deuxièmes trous (22) est identique à une direction dans laquelle un flux d'air horizontal s'écoule dans la région périphérique (10b) lorsque le capteur de chaleur (1) est installé sur un plafond.

9. Capteur de chaleur (1) selon l'une quelconque des revendications 1 à 8,
dans lequel la première partie latérale (12a) se situe plus près d'une périphérie extérieure que les premiers trous (21) et se situe plus près de la partie inférieure (11) que les deuxièmes trous (22).
